# EUROPEAN PATENT APPLICATION

(11) **EP 2 036 780 A1**
(43) Date of publication of application: **18.03.2009**
(21) Application number: 07116246.5
(22) Date of filing: 12.09.2007
(51) Int. Cl.: B60R 21/015, B60N 2/00

(54) **Method and system for detecting an occupant in a vehicle seat**

(71) Applicant: IEE INTERNATIONAL ELECTRONICS & ENGINEERING S.A., 6468 Echternach (LU)
(72) Inventor: Bieck, Werner, 54459, WILTINGEN (DE); Bour, Christian, 54490, Domprix (FR); Decoster, Yves, 6760, ETHE (BE); Goedert, Guenter, 54329, TRIER (DE); Lamesch, Laurent, 4881, LAMADELAINE (LU); Orlewski, Pierre, 9021, ETTELBRUCK (LU)
(74) Representative: Beissel, Jean

(57) **Abstract**

An occupant detection system comprises an electrode arrangement for placement into a seat of an automotive vehicle and an evaluation circuit operatively connected to the electrode arrangement. The latter includes a first electrode, a second electrode and an electric insulator layer sandwiched between the first and second electrodes. When the electrode arrangement is in place in the seat, the first electrode forms with vehicle ground a first capacitor having a first capacitance, the first electrode forms with the second electrode a second capacitor having a second capacitance and the second electrode forms a first plate of a third capacitor having a third capacitance. As a first indicator of the seat occupancy state, a measure of the first capacitance is determined while the second electrode is operated as a driven shield for the first electrode. The fluctuations of at least one of the first, second and third capacitances are measured and the frequency spectrum of the measured fluctuations is analysed, which yields a second indicator of the occupancy state. The derivation of the occupancy state of the seat is then based on both the first indicator and the second indicator.

## Description

### Technical field

The present invention generally relates to the detection of an occupant in a vehicle seat, in particular using a capacitive detection system.

### Background Art

As used herein, an occupant detection system refers to a system adapted for detecting the occupancy state of a vehicle seat. A capacitive sensor, called by some electric field sensor or proximity sensor, designates a sensor, which generates a signal responsive to the influence of what is being sensed (a person, a part of a person's body, a pet, an object, etc.) upon an electric field emitted by the capacitive sensor. A capacitive sensor generally comprises at least one electrode, to which is applied an oscillating electric signal when the sensor is operating, and which thereupon emits an electric field into a region of space proximate to the electrode. An occupant or an object, when placed into this region of space, interacts with the electric field, and this interaction is detected by the capacitive sensor.

Numerous variants of capacitive sensing systems and associated methods are known in the field of occupancy sensing. The present invention uses an electrode arrangement, which includes at least a first electrode, a second electrode and an electrically insulating layer sandwiched between said first and second electrodes. When in place in a vehicle seat, the electrode arrangement is oriented in such a way that the first electrode faced towards a seat surface, which an occupant comes in contact with when seated on the seat, whereas the second electrode the faces away from that seat surface. As will be apparent to those skilled in the art, the first electrode (the so-called "sense" electrode) and grounded surfaces situated opposite the first electrode in the passenger compartment thus form capacitor plates of a first capacitor. The space between these capacitor plates comprises the space above the vehicle seat, which can be occupied by an occupant of the seat. Accordingly, the capacitance of the first capacitor depends on the state of occupancy of the seat (i.e. on whether an adult, a child, a pet, an empty or occupied child seat, or the like is placed thereon). To reduce the sensitivity of the system with respect to the space lying behind the second electrode (as seen from the first electrode), it is known to drive the second electrode (the so-called "shield" electrode) with substantially the same voltage as the first electrode. In this context, "the same voltage" means a voltage having the same amplitude and phase. Those skilled will appreciate that the second electrode forms a first capacitor plate of another capacitor, whose capacitance (hereinafter called third capacitance) depends on objects behind the second electrode. The second capacitor plate of the third capacitor can e.g. be the seat frame, the seat pan, the seat heater, etc. The second electrode being at any moment of the measurement of the first capacitance at substantially the same electric potential as the first electrode, the electric field between the two electrodes is substantially zero. This provides for shielding the first electrode against any uncertainties concerning and variations of the third capacitance and significantly increases the sensitivity of the first electrode into the direction of the occupant.

A capacitive seat occupancy classification system and method of this kind have been proposed, for instance, in EP 1 457 391 A1_{[m1]}. A similar electrode configuration for the purpose of capacitive proximity sensing in the field of robotics is known from US 5,166,679 (Vranish et al.).

A challenge of capacitive occupant detection systems is reliable detection of a wet seat cover, which otherwise could lead to an erroneous detection of an occupant. US patent 6,392,542, to Stanley, teaches an electric field sensor comprising an electrode arrangement with a sensing electrode and a shielding electrode mountable within a seat and operatively coupled to a sensing circuit, which applies to the electrodes an oscillating or pulsed signal "at most weakly responsive" to wetness of the seat. Stanley proposes to measure phase and amplitude of the current flowing to the sensing electrode in response to applying thereto a voltage of a frequency preferably well above 400 kHz, to detect an occupied or an empty seat and to compensate for seat wetness.

### Technical problem

It is an object of the present invention to provide for an improved detection of the occupancy state of a vehicle seat. This object is achieved by a method as claimed in claim 1 and a system as claimed in claim 12.

### General Description of the Invention

As explained in brief hereinbefore, the present invention concerns an occupant detection system with an electrode arrangement for placement into a seat of an automotive vehicle, wherein the electrode arrangement includes a first electrode, a second electrode and an electric insulator layer sandwiched between the first and second electrodes. When the electrode arrangement is in place in the seat, the first electrode forms with vehicle ground a first capacitor having a first capacitance, the first electrode forms with the second electrode a second capacitor having a second capacitance and the second electrode forms a first capacitor plate of a third capacitor having a third capacitance. The second plate of the third capacitor may be formed by conductive surfaces at vehicle ground potential or a further conductive surface in the vehicle seat, e.g. a seat heater, the seat pan or a third electrode arranged behind the second electrode (as seen from the first electrode). As a first indicator of the seat occupancy state, a measure of the first capacitance is determined while the second electrode is operated as a driven shield for the first electrode. Those skilled will appreciate that, as used herein, "a measure" of a capacitance is intended to encompass any measured physical quantity or combination of measured physical quantities from which the capacitance can be derived. According to an important aspect of the invention, the fluctuations of at least one of the first, second and third capacitances are measured and the frequency spectrum of the measured fluctuations is analysed. This analysis yields a second indicator of the seat occupancy state. The derivation of the occupancy state of the seat is based on both the measure of the first capacitance and the frequency spectrum of the measured fluctuations. A first aspect of the present invention is concerned with the method of detecting the occupancy state, a second aspect of the invention is concerned with occupant detection system having an electrode arrangement as set forth hereinabove and an evaluation circuit operatively connected to the first and second electrodes that is configured and arranged so as to operate in accordance with the method.

The inventors have recognised that the fluctuations of the first, second and/or third capacitance (i.e. sequences of the capacitance measures recorded during a certain time), not only the isolated capacitance measures themselves, represent an additional indicator of the occupancy state. Until now, fluctuations of the capacitances have been considered as disturbing and efforts always went into the direction of reducing the "noise" on the measurements, e.g. by smoothing of the data. The utility of the fluctuation spectrum as an additional indicator of the seat occupancy had not, so far, been discovered. Those skilled will appreciate that car, seat and occupant form together a complex system of mechanical oscillators having various oscillatory modes and corresponding eigenfrequencies. It has been discovered that the eigenfrequencies of a human seated on a vehicle seat can be derived from the fluctuations of the capacitances. In particular, the frequency spectrum of the fluctuations comprises a certain number of peaks, caused by the vibrations imposed of the seat and possibly its occupant or an object placed on it. These vibrations, and thus a particular set of spectral peaks, are characteristic of the occupancy state of the seat, i.e. whether it is empty, occupied by an adult, a child seat, etc. Accordingly, the analysis of the frequency spectrum of the fluctuations preferably concerns the range from 0.25 up to 25 Hz, more preferably from 0.5 to 25 Hz. As shall be appreciated, the measure of the first capacitance, i.e. the first indicator considered herein, on the one hand, mainly depends on the electric properties of the occupying item, i.e. whether the occupying item (as used herein, this term may designate any object or animate being that can occupy the vehicle seat) is a good electric conductor or more like a dielectric. Size and mass of the occupying item may have an influence on the capacitance, but experience shows that this is the case only to a lesser extent. On the other hand, the frequency spectrum of the fluctuations of the considered capacitance depends preponderantly on the mechanical properties of the occupying item, e.g. size, weight, weight distribution, etc. Accordingly, the two indicators are, in a certain sense, independent from one another, thus increase the information available to the evaluation circuit for making the estimate of the occupancy state.

The second indicator, derived from the fluctuations of a capacitance, can be used to overrule the occupancy state that would result from the contemplation of the first indicator alone. This is especially useful in the case of a wet seat cover: in such a situation, the measure of the first capacitance might indicate that the seat is occupied by a person, e.g. a small-sized adult, whereas the second indicator would indicate an empty seat because the vibrations of an empty seat with a wet cover are not significantly different from those of an empty seat with a dry seat cover. In this case, it would be appropriate to let the second indicator overrule the first indicator. Such "overruling" may be implemented in the evaluation circuit based on a confidence level or "trustworthiness" index attached to each indicator. The derivation of the occupant class may be effected according to conventional pattern recognition algorithms, using, e.g. cluster analysis, neural networks, nearest-neighbour methods, etc.

Those skilled will be aware that there are numerous ways for determining capacitance, e.g. by measuring charging time of the electrode(s), the charge accumulate for a given applied voltage, a current flowing into the electrode(s) in response to a certain applied voltage, etc. It shall be understood that the evaluation circuit may determine the fluctuations of the first capacitance while the second electrode is operated as a driven shield for the first electrode. Alternatively or additionally, the evaluation circuit may also determine the fluctuations of the third capacitance while the second electrode is operated as a driven shield for the first electrode. If the fluctuations of the second capacitance are to be determined, this is preferably achieved in a time interval during which the second electrode is not operated as driven shield for the first electrode. Also, if the fluctuations of the second capacitance are to be determined, the electric insulator sandwiched between the first and second electrode preferably comprises a material, the permittivity of which depends on the pressure acting on the material, an electret layer or a piezoelectric layer. As a material whose permittivity depends on the pressure acting thereon, one may use, for instance, a composite material comprising an elastic matrix (e.g. rubber, foam, elastomer, polymer or the like) having particles of a filler material homogeneously dispersed therein, in such a way that when the material is subjected to pressure, the matrix undergoes deformation and the particles of the filler are moved closer together. The filler material and the elastic matrix preferably have very different permittivity, so that the dynamic range of the overall permittivity is maximal. One may use, for instance, a matrix material having a modulus of elasticity in the MPa range (e.g. from 0.5-5 MPa) with relatively low permittivity and particles of BaTiO₃ or TiO₂ as filler material. Alternatively, one could use a matrix material having relatively high permittivity and filler particles having relatively low permittivity. It should be noted that, in addition to the material whose permittivity changes as a function of pressure, the electric insulator could comprise further layers. If, however, the electric insulator between the electrodes consists of a composite material as described hereinbefore, and if conductive filler particles are used in that material, the density of these filler particles in the matrix material should be chosen such that the maximally expected compression does not render the composite material conductive (if, by the volume change due to the compression, the percolation threshold of the composite material is exceeded). Of course, that restriction on the density of conductive filler particles is not necessary if there is at least one additional layer between the first and second electrodes, which guarantees that the electrodes remain electrically insulated from one another, even under pressure.

Preferably, the evaluation circuit is configured and arranged so as to determine a current flowing into the first electrode and derive the measure of the first capacitance from the current flowing in the first electrode when the second electrode is operated as a driven shield.

Advantageously, the evaluation circuit is configured and arranged so as to derive the fluctuations of the first and/or second capacitance from the current flowing in the first electrode. In this embodiment, the evaluation circuit may, for instance, record the measures of the first capacitance during a given time interval and then derive the second indicator of the occupancy state from these measures.

Advantageously, the evaluation circuit is configured and arranged so as to determine a current flowing into the second electrode and to derive fluctuations of the third capacitance from the current flowing in the second electrode when the second electrode is operated as a driven shield. Preferably, the evaluation circuit measures the third capacitance at the same time as it measures the first capacitance.

According to certain embodiments of the invention, the evaluation circuit is configured and arranged so as to operate at least in a first and a second mode of operation, which are not carried out at the same time. In the first mode of operation, the second electrode is operated as a driven shield for the first electrode, the current flowing into the first electrode when the second electrode is operated as a driven shield is measured and the measure of the first capacitance is derived from this current. The second mode of operation is dedicated to determining the fluctuations of the second and/or the third capacitance.

According to a preferred embodiment of the invention, in the second mode of operation, the evaluation circuit applies an alternating voltage between the first and second electrodes, determines a current flowing into the first and/or second electrode in response to the alternating voltage and derives the fluctuations of the second capacitance from the current flowing into the first and/or second electrode in response to the alternating voltage. In this embodiment, the electric insulator layer sandwiched between the first and second electrode preferably comprises a material whose permittivity varies as a function of pressure applied to it. If such a material is used, the fluctuations of the capacitance are not only caused by the variation of the thickness of the insulating layer between the first and second electrode, so that the fluctuations of the capacitance are amplified with respect to the situation where a material is used, whose permittivity remains substantially constant under compression.

According to another preferred embodiment of the invention, the electric insulator layer comprises an electret layer and/or a piezoelectric layer and the evaluation circuit is configured and arranged so as to determine, in the second mode of operation, a current induced in the first and/or second electrode by the electret or piezoelectric layer (in response to pressure being applied to the electret or piezoelectric layer) and derive the fluctuations of the second capacitance from the induced current. Those skilled will appreciate that if the electric insulator layer comprises an electret or piezoelectric layer, it is not necessary to apply a potential difference by means of an additional voltage source, in order to determine the second capacitance or changes thereof, since an electret or piezoelectric layer itself causes a current to flow when pressure is applied, i.e. when the electrode arrangement is subjected to mechanical vibrations.

According to another possible embodiment of the invention, the evaluation circuit is configured and arranged so as to, in the second mode of operation, operate the first electrode is as a driven shield for the second electrode and measure the fluctuations of the third capacitance.

Whereas in the previously discussed embodiments of the occupant detection system, the second plate of the third capacitor is preferably formed by a grounded surface of the vehicle compartment, in a further preferred embodiment of the invention, the electrode arrangement comprises a third electrode, which forms the second capacitor plate of the third capacitor. Preferably, the second and third electrodes sandwich an electric insulator layer comprising an electret layer or a piezoelectric layer, so that the fluctuations of the third capacitance due to vibrations are enhanced. Even more preferably, the evaluation circuit is in this case configured and arranged so as to measure a current flowing into the third electrode. Most preferably, the evaluation circuit is configured and arranged so as to operate at least in two modes of operation, the evaluation circuit, in the first mode of operation, determining a current flowing into the first electrode and deriving the measure of the first capacitance from the current flowing in the first electrode, and, in the second mode of operation, determining a current flowing into the third electrode and deriving fluctuations of the third capacitance from the current flowing in the third electrode.

Preferably, the evaluation circuit derives the load on the seat from the measures of the second and/or the third capacitance. Preferably, the measure of the load applied on the seat comprises taking an average of the fluctuations of said second and/or said third capacitance.

As will be appreciated, the evaluation circuit may be implemented in various ways. For instance, it may comprise or be implemented as an application-specific integrated circuit (ASIC), a field-programmable gate array (FPGA), a digital signal processor, and the like.

### Brief Description of the Drawings

Preferred embodiments of the invention will now be described, by way of example, with reference to the accompanying drawings in which:
Fig. 1 is a schematic lateral view of an occupant in a car seat;
Fig. 2 is a schematic view of a capacitive occupant detection system;
Fig. 3 is a simplified equivalent circuit diagram of a first embodiment of an evaluation circuit of an occupant detection system;
Fig. 4 is a schematic illustration of the mechanical oscillator system car-seat-occupant;
Fig. 5 is a simplified equivalent circuit diagram of a second embodiment of an evaluation circuit of an occupant detection system;
Fig. 6 is a simplified equivalent circuit diagram of a third embodiment of an evaluation circuit of an occupant detection system;
Fig. 7 is a simplified equivalent circuit diagram of a fourth embodiment of an evaluation circuit of an occupant detection system;
Fig. 8 is a simplified equivalent circuit diagram of a variant of the evaluation circuit of Fig. 7;
Fig. 9 is a simplified equivalent circuit diagram of a fifth embodiment of an evaluation circuit of an occupant detection system.

### Description of Preferred Embodiments

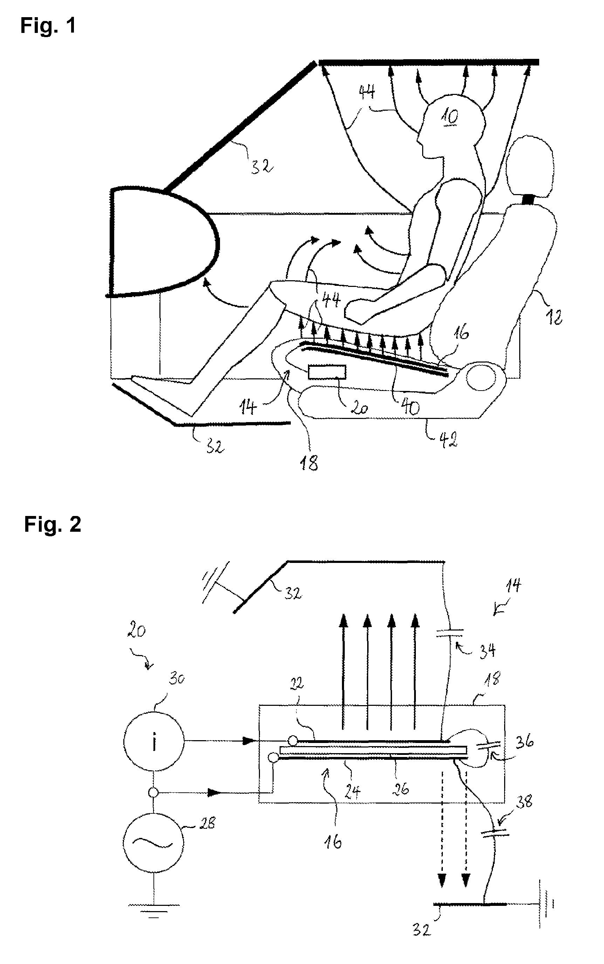

Fig. 1 shows an occupant 10 seated in a vehicle seat 12 equipped with a capacitive occupant detection system 14. The occupant detection system 14 comprises an electrode arrangement 16 disposed underneath the surface of the seating portion 18 of the vehicle seat 12 and an evaluation circuit 20. The occupant detection system 14 is shown in more detail in Fig. 2.

The electrode arrangement 16 comprises a sandwich structure with a substantially planar first electrode 22, a substantially planar second electrode 24 and an electrically insulating layer 26 arranged between the electrodes 22 and 24. Various configurations for the electrode arrangement 16 are possible, for instance, the first and second electrodes could be provided as printed conductive layers on both sides of a flexible electrically insulating film (e.g. a PET film, a PEN film, a PI film, or the like). Alternatively, the electrodes could be carried on individual carrier films. At least one of the carrier films could serve as the electrically insulating spacer. Alternatively, an additional spacer could be used, e.g. an additional film, sheet or textile. The electrodes could also be conductive textile layers, separated by an insulating textile (e.g. a warp-knitted spacer fabric) or film. Other suitable configurations will readily come into the mind of those skilled in the art. It shall be noted that each electrode could form a closed surface within its outer boundaries but not necessarily has to form such a closed surface. Each electrode could, for instance, have the form of a continuous conductive pattern with openings or gaps therein (as opposed to having the form of a closed surface), e.g. in form of a wire running on a meandrous course, a lattice pattern, a grid pattern, combinations of these examples, etc. It should be understood that the term "substantially planar" is to be intended to cover an electrode configuration, where the electrode is not strictly comprised in a flat plane, e.g. when the electrode is curved or undulated, but relatively thin in comparison to its lateral dimensions.

In the shown embodiment, the evaluation circuit comprises an oscillator 28 (e.g. a voltage-controlled oscillator or a numerically controlled oscillator), which is operatively connected to the second electrode 24, and a current measurement circuit 30 operatively connected between the second electrode 24 and the first electrode 22.

When the electrode arrangement 16 is in place in the seating portion of the vehicle seat 18 (or, alternatively, in the seat back), the first electrode 22 forms a first capacitor with the surrounding grounded surfaces 32 of the vehicle compartment, e.g. with metal parts in the compartment ceiling, the vehicle door, the dashboard and/or the floor. The capacitance of this first capacitor (the "first" capacitance) is illustrated at reference numeral 34. It is important to note that the first capacitance depends on the occupancy state of the vehicle seat 12 (i.e. on whether e.g. an adult, a child, a pet, a child seat, etc. occupies the space between the plates of the first capacitor). The first electrode 22 and the second electrode 24 form together a second capacitor (having as capacitance the "second" capacitance, illustrated at reference numeral 36). Likewise, the second electrode 24 forms a third capacitor with the surrounding grounded surfaces 32 of the vehicle compartment. The "third" capacitance of the third capacitor is shown at reference numeral 38.

When the first capacitance 34 is to be determined, the oscillator 28 applies to the second electrode 24 an oscillating voltage, while the current detection circuit 30 maintains on the first electrode 22 a voltage having substantially the same amplitude and phase as the voltage on the second electrode. During the measurement of the first capacitance 34, the second electrode 24 thus remains at substantially the same electric potential as the first electrode 22. Consequently, the sensitivity of the first electrode 22 is directed only into the space above the vehicle seat 12. In other words, the second electrode 24 shields the first electrode 22 and prevents it from capacitively coupling to objects lying behind (as seen from the first electrode 22) the second electrode 24, e.g. a seat heater 40, the seat pan 42, etc. To achieve efficient shielding of the first electrode 22 the second electrode 26 preferably is a little larger in size, as shown in Fig. 2. The course of the electric field lines 44 departing from the first electrode when the first capacitance 34 is to be determined is roughly illustrated in Fig. 1. The occupant 10 has been drawn with a certain distance to the seating portion 18 only for the purpose of clarity of the drawing. Those skilled will appreciate that the current flowing into the first electrode 22 in response to an oscillating voltage of a predefined amplitude being applied to it depends on the first capacitance and therefore on the occupancy state of the seat 12. Accordingly, a measure of the first capacitance can be derived from the current flowing into the first electrode and thus a first indicator of the occupancy state is obtained.

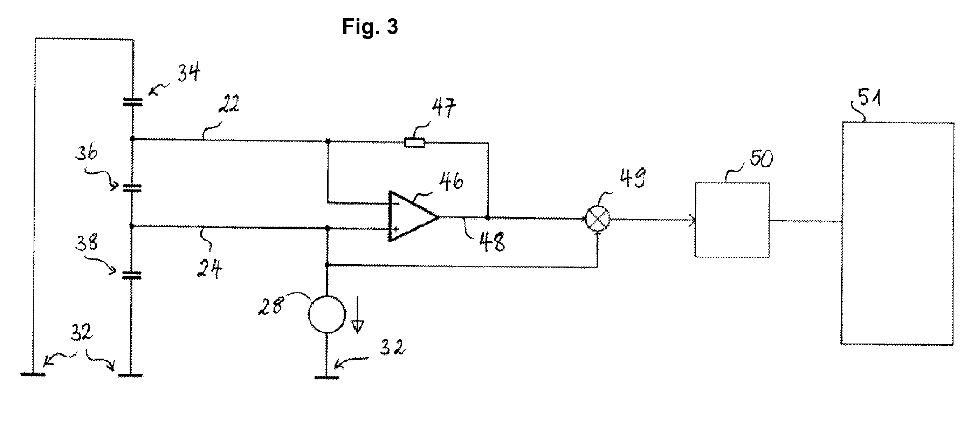

Fig. 3 shows a (simplified) equivalent circuit diagram of a first embodiment of a capacitive occupant detection system. Oscillator 28 applies an AC voltage to the second electrode 24. Amplifier 46 and feedback impedance 47 form together a transimpedance amplifier, which maintains the voltage on the first electrode 22 substantially equal to the voltage on the second electrode 24. The transimpedance amplifier thus converts the current flowing into the first electrode 22 into a voltage at the amplifier output 48. Since the first electrode 22 is at any moment of this measurement at substantially the same potential as the second electrode 24, the current through the second capacitance 38 remains essentially zero. Therefore, the current flowing into the first electrode depends almost exclusively on the first capacitance 34. Mixer 49 and low pass filter 50 convert the AC output of amplifier 46 to a DC voltage, which is dependent on the first capacitance 34. This voltage is fed to an analog-to-digital converter (ADC) input of a microcontroller 51. The mixer 50 preferably comprises a clocked rectifier outputting a DC signal proportional to the component of voltage output by the amplifier 46 that is in phase with the voltage on the second electrode 24 and/or a DC signal proportional to the component of voltage output by the amplifier 46 that is 90°-phase-shifted with respect to the voltage on the second electrode 24. The DC signal output by mixer 50 may be further treated before it is fed to the microcontroller 51, e.g. for calibrating purposes. Since even if the capacitance 34 is close to zero, there is an AC voltage at the output of amplifier 46 and therefore a signal at output of the low pass filter, this offset is preferably subtracted (not shown in the drawings) either before or after the mixer 50.

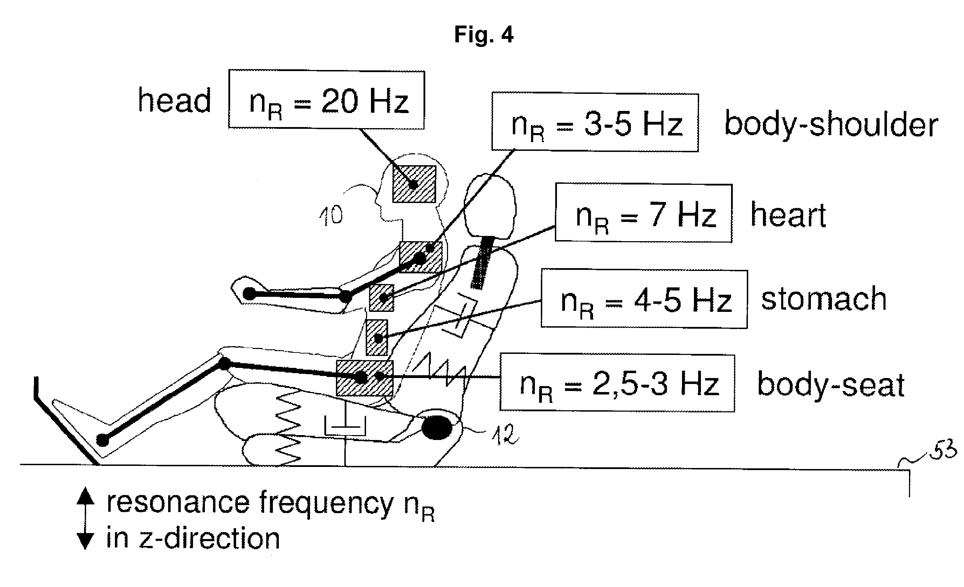

Fig. 4 schematically shows a model of the system of mechanical oscillators formed by the car, the seat and the occupant (based upon the publication "Comfort Assessment of Vehicles" of the IKA, RWTH Aachen, available online at http://www.ika.rwth-aachen.de/lehre/kfz-labor/4_comfort_en.pdf. It should be noted that the model is highly simplified. When the vehicle travels on a road, the unevenness thereof translates into vibrations communicated to the wheels, the chassis 53, the motor unit, the seat 12 and the occupant 10. The various mechanical oscillators of the system are thus caused to oscillate at their respective resonance frequencies. Examples of ranges of the resonance frequencies in z-direction (the vertical in Fig. 4) of these oscillators are indicated in Fig. 4. The resonance frequency of the chassis 53 is typically comprised in the range from 1 to 2 Hz; the resonance frequency of the wheels is comprised in the range from about 8 to 15 Hz and that of the motor unit in the range from about 12 to 15 Hz. The occupant's body, which may also be considered as a system of mechanical oscillators has resonance frequencies in the ranges 2.5 to 3 Hz (body-seat), 4 to 5 Hz (stomach), around 7 Hz (heart), 3 to 5 Hz (body-shoulder) and around 20 Hz (head). Those skilled will appreciate that when the seat 12 is empty or carries an object (e.g. a child seat, a bag, etc.), certain resonance frequencies will be absent from the system (while others might be present). For an empty child seat (light belted to the seat) or a light object, one observes, for instance resonance in the frequency range above about 10 Hz. For a lightly belted occupied child seat, the resonance may occur already at about 7 Hz. If the child seat is tightly belted to the seat, the resonance typically lies above 25 Hz. The analysis of the vibrations of the system thus provides an indication on the occupancy state of the seat 12.

In the present invention, the vibrations of the seat and its possible occupant are detected through the fluctuations of at least one of the first, second and third capacitance.

In the embodiment of Fig. 3, the microcontroller 51 records the measures of the first capacitance during a predefined time interval (typically a few tens of seconds, preferably 5 to 30 s) and analyses the fluctuations thereof, e.g. by carrying out a Fourier transformation of the waveform so obtained and detecting the peaks in the frequency spectrum of the fluctuations. The measures of the first capacitance fluctuate around a mean value. This mean value may serve as the first indicator of the occupancy state, whereas a second indicator of the occupancy state may be retrieved from the fluctuations of the first capacitance. Those skilled will appreciate that systems operating according to the precepts of the present invention can detect the occupancy state of a vehicle seat more reliably. For instance, the above-mentioned wet-seat-cover problem is significantly mitigated, since even if the measures of the first capacitance were similar to those one expects in the case of an adult occupant, the analysis of the fluctuations of the measures of the first capacitance would reveal that the typical peaks in the frequency spectrum of the fluctuations are absent. Of course, the analysis of the fluctuations may also be combined with further measurements aiming at detecting a wet seat cover, e.g. measuring at multiple frequencies.

In the embodiments discussed hereinafter, the vibrations of the vehicle seat and any occupying item (object, pet, adult, child, empty or occupied child seat, etc.) are detected through the fluctuations of the second capacitance or the third capacitance.

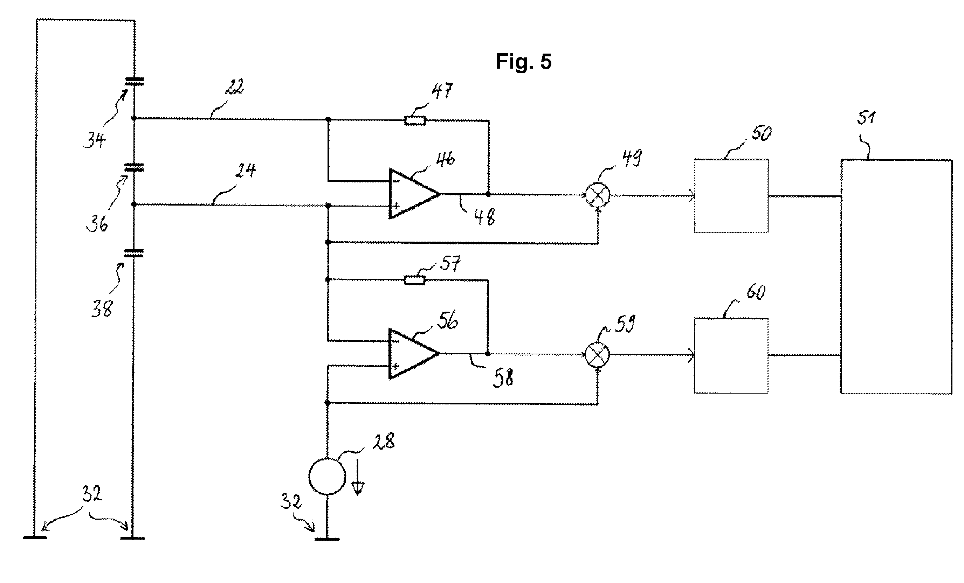

Fig. 5 shows a (simplified) equivalent circuit diagram of a second embodiment of a capacitive occupant detection system. The evaluation circuit of Fig. 5 measures the first capacitance 34 the sum of the third capacitance 38 and the series capacitance of the first and the second capacitances 34, 36 at the same time. Unlike in the system of Fig. 3, the oscillator 28 is not directly connected to the second electrode 24 but indirectly through a second transimpedance amplifier, formed of amplifier 56 and impedance 57. The second transimpedance amplifier 56, 57 keeps the voltage on the second electrode 24 at the same level as the output of the oscillator 28 and converts the current flowing into the second electrode 36 into an AC voltage outputted at reference numeral 58. The current that flows into the second electrode 24 corresponds to the sum of (a) the current flowing through the third capacitance 38 and (b) the current through the series of first capacitance 34 and second capacitance 36. Mixer 59 and low pass filter 60 convert the AC voltage output by the amplifier 56 into a DC voltage and feed this into microcontroller 51.

The circuit for determining the measures of the first capacitance (transimpedance amplifier 46, 47, mixer 49 and low-pass filter 50) is the same as in Fig. 3. The microcontroller 10 of Fig. 5 may record the measures of the first capacitance and/or the measures of the current flowing into the second electrode to determine the fluctuations thereof and derive the frequency spectrum of the vibrations. The mean value of the measures of the first capacitance again serves as the first indicator of the occupancy state, whereas the second indicator of the occupancy state is derived from either the fluctuations of the first capacitance or those of the current flowing into the second electrode, or both.

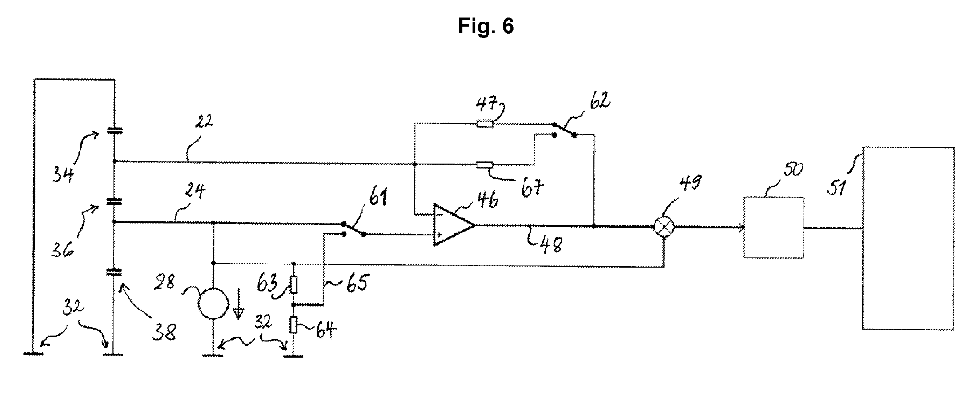

Whereas in the embodiments of Figs.3 and 5, the measures relating to the fluctuations of the capacitances are taken simultaneously with the measures of the first capacitance 34, this is not the case for the embodiments of Figs. 6-8. In these embodiments, the evaluation circuit is configured for operating sequentially in at least two different modes, the first one of these modes being dedicated to detecting the measure of the first capacitance and the second one of these modes being dedicated to detecting the fluctuations of the second capacitance 36.

In the embodiment of Fig. 6, the evaluation circuit is switchable between two modes of operation by the switches 61 and 62. When the switches 61 and 62 are in the shown position (first mode of operation), the operative part of the circuit of Fig. 6 is equivalent to the circuit shown in Fig. 3 and operates as described with respect to that embodiment. When (in the second mode of operation) the switches 61 and 62 are in the other position, the positive input of amplifier 46 is connected to an AC voltage whose amplitude is lower than the amplitude of the AC voltage applied to the second electrode 24. (The impedances 63 and 64 form a voltage divider, which provides at node 65 a voltage, whose amplitude is reduced with respect to the voltage on the second electrode 24 but which has the same phase.) The switch 62 serves to select between the impedances 47 and 67, and thus to adjust the amplification factor of the transimpedance amplifier. Through the feedback action of amplifier 46 and feedback impedance 67, the first electrode is kept at the same potential as the voltage divider output 65, which implies that the first electrode 22 is driven with an alternating voltage having the same phase as the voltage on the second electrode 24 but different amplitude. Therefore, there is a voltage difference across the second capacitance 36, and, as a consequence, there is a (non-zero) current through the second capacitance 36. Since this current is appreciably larger than the current through the first capacitance 34, the transimpedance amplifier converts, in the second mode of operation, almost only this current into an output voltage at its output 48. The substantial difference of the first and the second capacitances is also the reason why the amplification factor of the transimpedance amplifier is preferably adjustable to the mode of operation. In the second mode of operation, the output of low pass filter 50 depends on the second capacitance. Accordingly, in the second mode of operation, the fluctuations of the second capacitance are recorded and analysed by the microcontroller 51. This analysis may be analogous to the analysis of the fluctuations of the first electrode, described with reference to Fig. 3. Switching between the two modes of operation is effected periodically by the microcontroller 51. The evaluation circuit further determines the mean value of the second capacitance, which depends on the mean compression of the electrode arrangement and thus on the weight of the occupant. The weight measure so obtained serves as a third indicator of the occupancy state of the vehicle seat 12. Those skilled will appreciate that a weight value derived from the average compression of the electrode arrangement is obtained in addition to the "dynamic" weight estimation that the analysis of the frequency spectrum of the fluctuations may provide. Using the third indicator thus puts the determination of the occupancy state on a yet more solid basis.

Those skilled will appreciate that the fluctuations of the second capacitance 36 in the embodiment of Fig. 6 can be due to the first electrode 22 vibrating relative to the second electrode 24 (such that the distance between the electrodes 22, 24 varies in accordance with the vibrations to which the seat 12 is subjected). Preferably, the electrically insulating layer 26 sandwiched between the first and the second electrode is thus compressible. More preferably, however, the electrically insulating layer comprises a material, whose permittivity depends on the compression of the material. Optionally, the electric insulating layer could in this embodiment also comprise an electret layer or a piezoelectric layer. As pointed out hereinabove, such a material would considerably amplify the variations of the second capacitance 36.

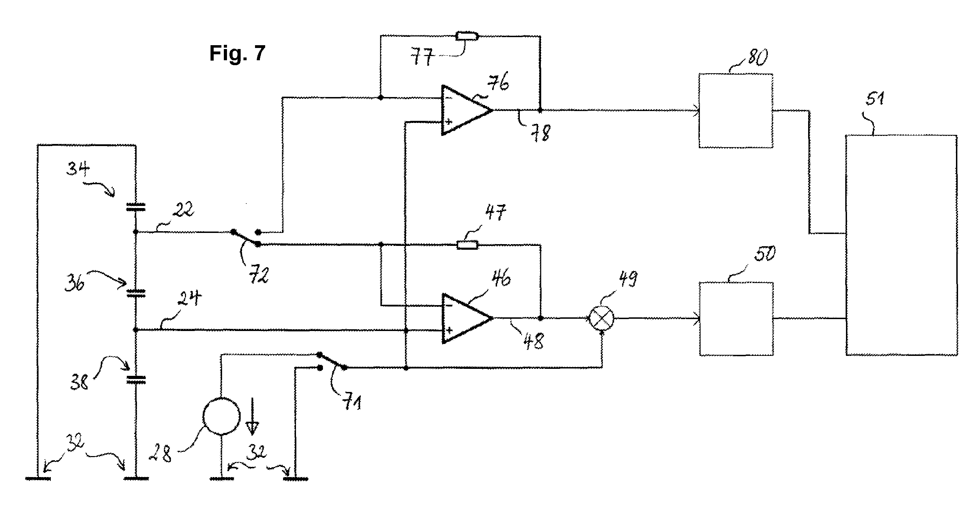

In the embodiment of Fig.7, the evaluation circuit is also switchable between two modes of operation by switches 71 and 72. When the switches 71 and 72 are in the shown position (first mode of operation), the operative part of the circuit of Fig. 7 is equivalent to the circuit shown in Fig. 3 and operates as described with respect to that embodiment. When (in the second mode of operation) the switches 71 and 72 are in the other position, the positive inputs of the amplifiers 46 and 76 are connected to ground 32 and the first electrode 22 is now connected to the second transimpedance amplifier composed of amplifier 76 and impedance 77. In this embodiment, the insulating layer 26 between the first electrode 22 and the second electrode 24 comprises an electret material or a piezoelectric material. Any pressure change (compression due to vibrations) imposed on the capacitor formed by the first and second electrode generates a charge transfer (i.e. a current) to the transimpedance amplifier 76, 77. The output 78 of the amplifier 76 is filtered by low pass filter 80 and routed to the ADC input of microcontroller 10. In the second mode of operation of the evaluation circuit, the microcontroller 51 thus records the fluctuations of the current flowing in the first electrode 22, which correspond in this case to the fluctuations of the second capacitance 36. The analysis of these fluctuations may be analogous to the analysis described with reference to Fig. 3. As in the previous embodiment, the microcontroller 51 makes the evaluation circuit periodically switch between the two modes of operation by acting upon the switches 71 and 72.

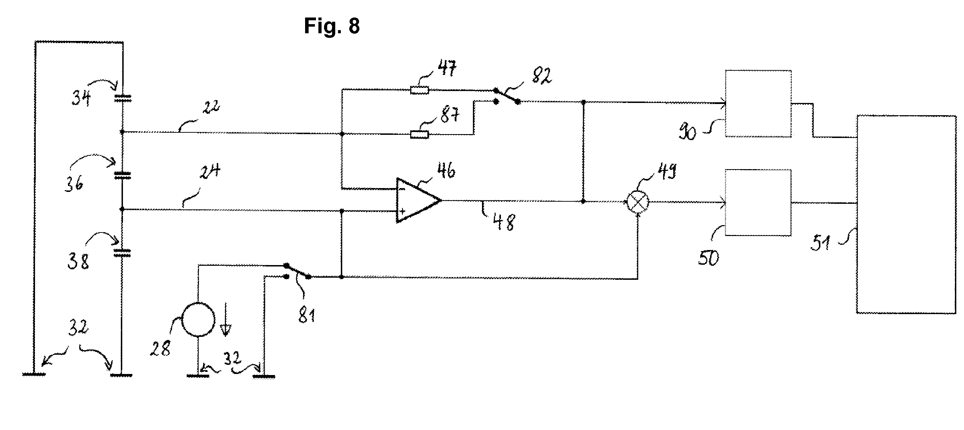

Fig. 8 shows a variant of the embodiment of Fig. 7. Again, the evaluation circuit is switchable between two modes of operation by switches 81 and 82. When the switches 81 and 82 are in the shown position (first mode of operation), the operative part of the circuit of Fig. 8 is equivalent to the circuit shown in Fig. 3 and operates as described with respect to that embodiment. In the second mode of operation (when the switches 81 and 82 are in the other position), the circuit of Fig. 8 operates analogously to the circuit of Fig. 7 (with switches 71 and 72 in the "second mode" position). Those skilled will note that the function of transimpedance amplifier 76, 77 is assumed in the embodiment of Fig. 8 by the transimpedance amplifier formed by the amplifier 46 and the impedance 87. In the second mode of operation, the positive input of the amplifiers 46 is connected to ground 32 and the feedback impedance is provided by impedance 87. In this variant too, the insulating layer 26 between the first electrode 22 and the second electrode 24 comprises an electret material or a piezoelectric material. Any pressure change (compression due to vibrations) imposed on the capacitor formed by the first and second electrode generates a charge transfer (i.e. a current) to the transimpedance amplifier 46, 87. The output 48 of the amplifier 46 is filtered by low pass filter 90 and routed to the ADC input of microcontroller 10. In the second mode of operation of the evaluation circuit, the microcontroller 51 thus records the fluctuations of the current flowing in the first electrode 22, which correspond in this case to the fluctuations of the second capacitance 36. The analysis of these fluctuations may be analogous to the analysis described with reference to Fig. 3. As in the embodiment of Fig. 6, the microcontroller 51 makes the evaluation circuit periodically switch between the two modes of operation by acting upon the switches 81 and 82. Those skilled will appreciate that in the embodiments of Figs. 7 and 8, the average compression of the electrode arrangement may also be used as a weight measure that can be relied upon for the determination of the occupancy state.

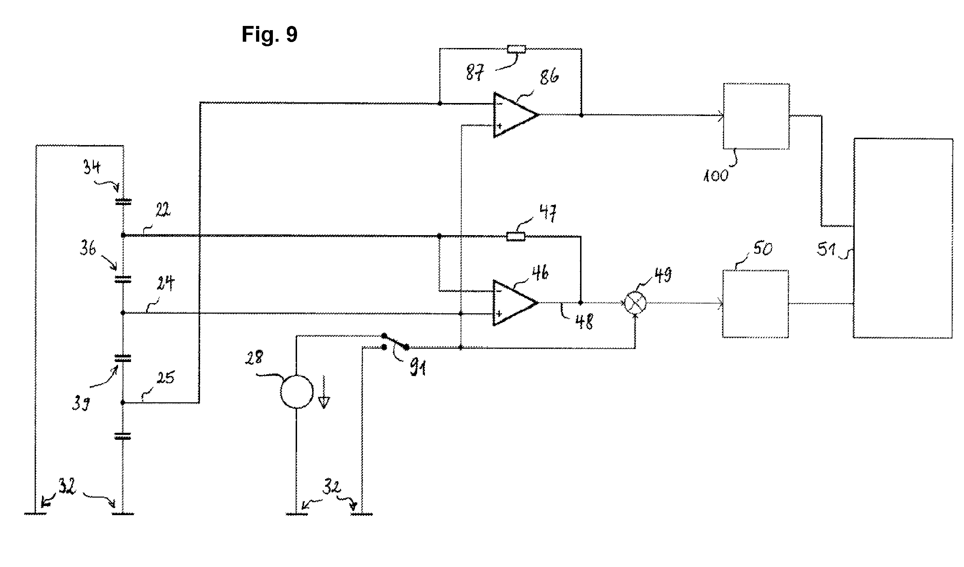

A simplified equivalent circuit diagram of an evaluation circuit according to yet another embodiment of the invention is shown in Fig. 9. As in the previous embodiments, the first electrode forms with vehicle ground a first capacitor having capacitance 34, and the first electrode 22 and the second electrode 24 forms together a second capacitor with capacitance 36. However, the electrode arrangement of the present embodiment comprises a third electrode 25 with which the second electrode 24 forms a third capacitor having capacitance 39. (The third electrode further forms with vehicle ground a fourth capacitor but this does not enter into the further considerations.) The second and third electrodes 24, 25 sandwich an electrically insulating layer, which comprises a piezoelectric layer or an electret layer (not shown in Fig. 9).

The evaluation circuit is switchable between two modes of operation by switch 91. When the switch 91 is in the shown position (corresponding to a first mode of operation), the first and second electrodes 22, 24 are connected as in the embodiment of Fig. 3 and the evaluation circuit operates as described with respect to that embodiment. In this case, the transimpedance amplifier provided by amplifier 86 and impedance 87 keeps the voltage on the third electrode substantially equal to the oscillating voltage applied to the second electrode by oscillator 28.

When the switch 91 is in the other position, and 72 are in the shown position (corresponding to a second mode of operation), the second electrode is connected to ground 32 and the positive input of the amplifier 86 is connected to ground 32, too. If the third capacitor is subjected to vibrations, the electret layer or the piezoelectric layer induces charges (and thus a current) in the third electrode 25, which are converted into a voltage at the output of the transimpedance amplifier 86, 87. This output is filtered in low-pass filter 100 and forwarded to the ADC input of microcontroller 51. The microcontroller 51 records the currents induced in the electrode 25 (which correspond to fluctuations of the third capacitance) and carries out a frequency analysis of the recorded data, so as to retrieve the second indicator of occupancy. The microcontroller 51 causes the switch 91 to periodically switch the evaluation circuit between the two modes of operation.

## Claims

1. A method of detecting an occupancy state of a vehicle seat using an occupant detection system comprising an electrode arrangement for placement into the vehicle seat, said electrode arrangement including a first electrode, a second electrode and an electric insulator layer sandwiched between said first and second electrodes; wherein, during use of said occupant detection system, said first electrode forms with vehicle ground a first capacitor having a first capacitance, said first electrode forms with said second electrode a second capacitor having a second capacitance and said second electrode forms a first plate of a third capacitor having a third capacitance;
said method comprising:
determining a measure of said first capacitance while operating said second electrode as a driven shield for said first electrode;
said method being **characterised by** measuring fluctuations of at least one of said first, second and third capacitance, analysing a frequency spectrum of said measured fluctuations and deriving an occupancy state of said seat based on both said measured first capacitance and said frequency spectrum.

2. The method as claimed in claim 1, wherein the fluctuations of the first and/or the third capacitance are measured while said second electrode is operated as a driven shield for said first electrode.

3. The method as claimed in claim 1 or 2, wherein the fluctuations of said second capacitance are measured in a time interval during which said second electrode is not operated as a driven shield for said first electrode.

4. The method as claimed in any one of claims 1 to 3, wherein said analysis of the frequency spectrum comprises the analysis of the spectral range up to 25 Hz.

5. The method as claimed in any one of claims 1 to 4, comprising determining a current flowing into said first electrode and deriving said measure of said first capacitance from said current flowing in said first electrode when said second electrode is operated as a driven shield.

6. The method as claimed in claim 5, comprising deriving the fluctuations of said first and/or second capacitance from the current flowing in said first electrode.

7. The method as claimed in any one of claims 1 to 6, comprising determining a current flowing into said second electrode and deriving fluctuations of said third capacitance from said current flowing in said second electrode when said second electrode is operated as a driven shield.

8. The method as claimed in claim 5, comprising applying an alternating voltage between said first and second electrodes, determining a current flowing into said first and/or second electrode in response to said alternating voltage and derive said fluctuations of the second capacitance from said current flowing into said first and/or second electrode in response to said alternating voltage.

9. The method as claimed in claim 5, wherein said electric insulator layer comprises at least one of an electret layer and a piezoelectric layer, the method comprising determining a current induced in said first and/or second electrode by said electret or piezoelectric layer and derive said fluctuations of said second capacitance from said induced current.

10. The method as claimed in claim 5, comprising operating said first electrode as a driven shield for said second electrode, determining a current flowing into said second electrode when said first electrode is operated as a driven shield and deriving fluctuations of said third capacitance from said current flowing in said second electrode when said first electrode is operated as a driven shield.

11. The method as claimed in any one of the preceding claims, comprising determining a measure of the load applied on said seat based upon said second and/or said third capacitance.

12. The method as claimed in claim 11, wherein determining said measure of the load applied on said seat comprises taking an average of the fluctuations of said second and/or said third capacitance.

13. An occupant detection system, comprising an electrode arrangement for being placed into the seat of an automotive vehicle, said electrode arrangement including a first electrode, a second electrode and an electric insulator layer sandwiched between said first and second electrodes; wherein, during use of said occupant detection system, said first electrode forms with vehicle ground a first capacitor having a first capacitance, said first electrode forms with said second electrode a second capacitor having a second capacitance and said second electrode forms a first capacitor plate of a third capacitor having a third capacitance;
an evaluation circuit operatively connected to said first and second electrodes, wherein said evaluation circuit is configured and arranged so as to determine a measure of said first capacitance while said second electrode is operated as a driven shield for said first electrode; **characterised in that** said evaluation circuit is further configured and arranged so as to measure fluctuations of at least one of said first, second and third capacitance, analyse a frequency spectrum of said measured fluctuations and derive an occupancy state of said seat based on both said measured first capacitance and said frequency spectrum.

14. The occupant detection system as claimed in claim 13, wherein said evaluation circuit is configured and arranged so as to determine a current flowing into said first electrode and as to derive said measure of said first capacitance from said current flowing in said first electrode when said second electrode is operated as a driven shield.

15. The occupant detection system as claimed in claim 14, wherein said evaluation circuit derives the fluctuations of said first and/or second capacitance from the current flowing in said first electrode.

16. The occupant detection system as claimed in any one of claims 13 to 15, wherein said evaluation circuit is configured and arranged so as to determine a current flowing into said second electrode and to derive fluctuations of said third capacitance from said current flowing in said second electrode when said second electrode is operated as a driven shield.

17. The occupant detection system as claimed in claim 13, wherein said evaluation circuit is configured and arranged so as to
in said first mode of operation, operate said second electrode as a driven shield for said first electrode, determine a current flowing into said first electrode when said second electrode is operated as a driven shield for said first electrode and derive said measure of said first capacitance from said current flowing in said first electrode when said second electrode is operated as a driven shield for said first electrode,
in said second mode of operation, apply an alternating voltage between said first and second electrodes, determine a current flowing into said first and/or second electrode in response to said alternating voltage and derive said fluctuations of said second capacitance from said current flowing into said first and/or second electrode in response to said alternating voltage.

18. The occupant detection system as claimed in claim 13, wherein said electric insulator layer comprises at least one of an electret layer and a piezoelectric layer and wherein said evaluation circuit is configured and arranged so as to
in said first mode of operation, operate said second electrode as a driven shield for said first electrode, determine a current flowing into said first electrode when said second electrode is operated as a driven shield for said first electrode and derive said measure of said first capacitance from said current flowing in said first electrode when said second electrode is operated as a driven shield for said first electrode,
in said second mode of operation, determine a current induced in said first and/or second electrode by said electret or piezoelectric layer and derive said fluctuations of said second capacitance from said induced current.

19. The occupant detection system as claimed in claim 13, wherein said evaluation circuit is configured and arranged so as to operate in a first mode of operation, in which it operates said second electrode is as a driven shield for said first electrode and determines said measure of said first capacitance, and in a second mode of operation, in which it operates said first electrode is as a driven shield for said second electrode and measures the fluctuations of said third capacitance.

20. The occupant detection system as claimed in claim 19, wherein said evaluation circuit is configured and arranged so as to
in said first mode of operation, determine a current flowing into said first electrode and derive said measure of said first capacitance from said current flowing in said first electrode,
in said second mode of operation, determine a current flowing into said second electrode and derive fluctuations of said third capacitance from said current flowing in said second electrode.

21. The occupant detection system as claimed in claim 13, wherein said electrode arrangement comprises a third electrode, said third electrode forming a second capacitor plate of said third capacitor.

22. The occupant detection system as claimed in claim 21, wherein said second and third electrodes sandwich an electric insulator layer comprising an electret layer or a piezoelectric layer.

23. The occupant detection system as claimed in claim 21 or 22, wherein said evaluation circuit is configured and arranged so as to measure a current flowing into said third electrode.

24. The occupant detection system as claimed in any one of claims 21 to 23, wherein said evaluation circuit is configured and arranged so as to in a first mode of operation, determine a current flowing into said first electrode and derive said measure of said first capacitance from said current flowing in said first electrode,
in a second mode of operation, determine a current flowing into said third electrode and derive fluctuations of said third capacitance from said current flowing in said third electrode.
